# EUROPEAN PATENT SPECIFICATION

(11) **EP 4 333 182 B1**
(45) Date of publication and mention of the grant of the patent: **24.06.2026**
(21) Application number: 23799527.9
(22) Date of filing: 08.02.2023
(51) Int. Cl.: H01M 50/105, H01M 50/124, H01M 50/129, H01M 50/131, H01M 50/183, H01M 50/358, H01M 50/30, H01M 50/119, H01M 50/121

(54) **GAS RELEASE MEMBER AND SECONDARY BATTERY COMPRISING SAME**
GASENTLADUNGSELEMENT UND SEKUNDÄRBATTERIE DAMIT
ÉLÉMENT DE DÉCHARGE DE GAZ ET BATTERIE SECONDAIRE LE COMPRENANT

(30) Priority: 02.05.2022 KR 20220054204
(43) Date of publication of application: 06.03.2024
(73) Proprietor: LG Energy Solution, Ltd., Seoul 07335 (KR)
(72) Inventor: LIM, Hun-Hee, Daejeon 34122 (KR); KIM, Sang-Hun, Daejeon 34122 (KR); KANG, Min-Hyeong, Daejeon 34122 (KR); SONG, Dae-Woong, Daejeon 34122 (KR); YU, Hyung-Kyun, Daejeon 34122 (KR); HWANG, Soo-Ji, Daejeon 34122 (KR)
(74) Representative: Plasseraud IP
(86) International application number: PCT/KR2023/001862
(87) International publication number: WO 2023/214644

(56) References cited:
- WO-A1-2009/066881
- JP-A- 2004 095 471
- JP-A- H09 134 732
- JP-A- H11 345 599
- JP-B2- 6 803 927
- KR-A- 20210 025 405
- KR-A- 20210 075 476

## Description

### TECHNICAL FIELD

The present disclosure relates to a gas release member and a secondary battery comprising the same.

The present application claims the benefit of Korean Patent Application No. 10-2022-0054204 filed on May 2, 2022 with the Korean Intellectual Property Office.

### BACKGROUND ART

With the increasing demand and technology development of mobile devices, the demand for secondary batteries as a source of energy is sharply increasing. In particular, secondary batteries are attracting attention as a source of energy of not only mobile devices including mobile phones, digital cameras, laptop computers, wearable devices or the like, but also electric devices including electric bikes, electric vehicles, hybrid electric vehicles or the like.

The secondary batteries are classified into cylindrical batteries and prismatic batteries in which an electrode assembly is included in a cylindrical or prismatic metal can, and pouch-type batteries in which an electrode assembly is included in a pouch-type case of an aluminum laminate sheet, according to the shape of the battery case. KR 2021 0075476 and WO 2009/066881 disclose a battery case. Here, the electrode assembly included in the battery case generates power by charging and discharging, and includes a positive electrode, a negative electrode, and a separator between the positive electrode and the negative electrode. The electrode assembly is classified into a jelly-roll type electrode assembly in which a long sheet type positive electrode and a long sheet type negative electrode, each coated with an active material are wound with a separator interposed between them, and a stack type electrode assembly in which a plurality of positive electrodes and a plurality of negative electrodes are stacked in a sequential order with a separator interposed between them.

Among them, there is a gradual rise in the use of the pouch-type battery having the structure in which the stack type or stack/folding type electrode assembly is included in the pouch-type battery case of the aluminum laminate sheet due to low manufacturing cost, small weight and easy-to-deform.

Recently, as the energy density of the battery cell increases, an amount of gas generated in the battery cell also increases. Unless the gas generated in the battery cell is easily released, venting may occur in the battery cell due to the gas generation.

To solve this problem, suggestions have been made on secondary batteries in which an opening that passes through the case in the thickness direction is formed in a part of the battery case, and a gas release member made of a gas permeable sheet that covers the entire opening is adhered to the inner side of the opening, to allow gas generated in the battery cell to go through the gas permeable gas release member and exit through the opening. When the gas generated in the battery cell is smoothly released through the gas permeable gas release member, venting does not occur and the battery cell may keep operating.

Unless the gas release member is firmly bonded to the battery case, the gas release performance degrades and moisture outside of the battery cell gets into the battery cell, and accordingly it is necessary to improve the bonding strength of the gas release member to the battery case.

### DISCLOSURE

### Technical Problem

The present disclosure is directed to providing a gas release member with improved bonding strength to a battery case and a secondary battery comprising the same.

### Technical Solution

To solve the above-described problem, according to an aspect of the present disclosure, there is provided a secondary battery as defined in claim 1. Optional features of the secondary battery are defined in claims 2 to 15.

### Advantageous Effects

The gas release member according to the invention is a sheet having gas permeability, and has the hole in the peripheral region of the sheet.

When the gas release member disposed at the area in which the hole present in the peripheral region overlaps with the inner resin layer of the battery case is thermally adhered to the case, the sealant resin included in the inner resin layer of the case flows into the hole, thereby improving the bonding strength to the case. Accordingly, it is possible to improve the release of gas generated in the battery cell through the gas release member, and reduce moisture infiltration into the battery cell.

When gas generated in the battery cell is smoothly discharged through the gas permeable gas release member and moisture infiltration into the battery cell is suppressed, venting does not occur and the battery cell may keep operating.

The effects of the present disclosure are not limited to the above-described effects, and these and other effects will be clearly understood by those skilled in the art from the specification and the accompanying drawings.

### DESCRIPTION OF DRAWINGS

The accompanying drawings illustrate an exemplary embodiment of the present disclosure and together with the foregoing disclosure, serve to provide further understanding of the technical aspect of the present disclosure, and thus, the present disclosure should not be construed as being limited to the drawings.
FIG. 1 is a perspective view showing a gas release member according to an embodiment of the present disclosure.
FIG. 2 is a perspective view showing a gas release member according to another embodiment of the present disclosure.
FIG. 3 is a perspective view showing a gas release member according to still another embodiment of the present disclosure.
FIG. 4 is a cross-sectional view of FIG. 1, taken along the line A-A'.
FIG. 5 is a top view of a secondary battery according to an embodiment of the present disclosure.
FIG. 6 is a cross-sectional view of FIG. 5, taken along the line B-B'.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, and should be interpreted based on the meanings and concepts corresponding to technical aspect of the present disclosure on the basis of the principle that the inventor is allowed to define terms appropriately for the best explanation.

Therefore, the embodiment described herein and illustration shown in the drawings is provided to describe an exemplary embodiment of the present disclosure, but not intended to fully describe the technical aspect of the present disclosure, so it should be understood that a variety of other equivalents and modifications could have been made thereto at the time that the application was filed.

It should be noted that irrelevant descriptions are omitted to clearly describe the present disclosure, and identical reference numerals are affixed to identical or similar elements throughout this disclosure.

Additionally, each element in the drawings is illustrated in an arbitrary size and thickness for convenience of description, and the present disclosure is not necessarily limited to the illustration. In the drawings, the thickness is exaggerated to clearly depict a plurality of layers and regions. Additionally, in the drawings, for convenience of description, some layers and regions are shown with an exaggerated thickness.

Additionally, unless the context clearly indicates otherwise, the term "comprises" or "includes" when used in this specification, specifies the presence of stated elements, but does not preclude the presence or addition of one or more other elements.

Additionally, "in a plane" as used herein refers to a shape of an object when viewed from the top, and "in cross section" as used herein refers to a shape of an object when a vertical cross section is viewed from the side.

A gas release member according to the invention has a hole.

The gas release member according to the invention is a sheet having gas permeability, and has the hole in a peripheral region of the sheet.

The "sheet having gas permeability" as used herein refers to a member that has a small thickness to area like a commonly used film or sheet and is made of a material that allows gas to discharge.

As described above, when the gas release member is not firmly bonded to a battery case, the gas release performance degrades and external moisture gets into the battery cell, and accordingly it is necessary to improve the bonding strength of the gas release member to the battery case. In particular, fluorine-based resin used as the material of the gas release member is a material that has high gas permeability (gas release performance) and is very useful in preventing the infiltration of external moisture, but has low bonding strength to the battery case.

Accordingly, the inventors provide the gas release member with improved bonding strength to the battery case.

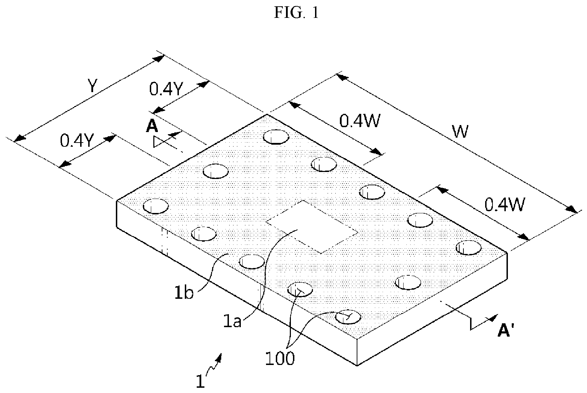

FIG. 1 is a perspective view showing the gas release member according to an embodiment of the present disclosure.

Referring to FIG. 1, the gas release member 1 has the hole 100. When the gas release member 1 is thermally adhered to the case of the battery, a sealant resin included in an inner resin layer of the case flows into the hole 100, thereby improving the bonding strength between the gas release member 1 and the case.

As shown in FIG. 1, the gas release member 1 is a sheet type member having gas permeability. The shape of the gas release member 1 may be rectangular as shown, but the gas release member 1 may come in various shapes, for example, circular, oval or elliptical or other shapes as necessary.

The hole 100 is present in the peripheral region 1b of the gas release member 1. "The peripheral region" of the sheet refers to a region that overlaps with the inner resin layer of the case when the gas release member 1 is thermally adhered to the inner side of the opening of the battery case to cover the entire opening. That is, the hole 100 does not overlap with the opening of the case, and is disposed in "the peripheral region" of the gas release member 1 overlapping with the inner resin layer of the case. On the contrary, a central region 1a of the gas release member 1 is a region except "the peripheral region", and is defined as a region that overlaps with the opening of the case.

The peripheral region 1b may be the region corresponding to the length from the end of the sheet that comprises the gas release member 1 to 2/5 of the total length of the sheet.

As shown in FIG. 1, when the sheet that comprises the gas release member 1 is rectangular in shape, the peripheral region 1b may be a region (0.4Y) corresponding to the length from the end of the sheet to 2/5 of the total horizontal length Y and a region (0.4W) corresponding to the length from the end of the sheet to 2/5 of the total vertical length W. When the hole 100 is formed in the above-described region, the gas release member 1 may be easily disposed such that the hole 100 does not overlap with the opening of the case and overlaps with the inner resin layer of the case. When the gas release member 1 is not rectangular in shape, for example, the gas release member 1 is circular in shape, the peripheral region 1b may be a region corresponding to the length from the end of the sheet that comprises the gas release member 1 to 2/5 of the diameter of the sheet.

The width of the peripheral region, for example, each of 0.4Y and 0.4W in FIG. 1 is preferably 2 mm or more from the end of the sheet for adhesion stability of the gas release member 1 to the battery case. More specifically, the width (0.4Y, 0.4W) of the peripheral region may be 2 to 15 mm from the end of the sheet.

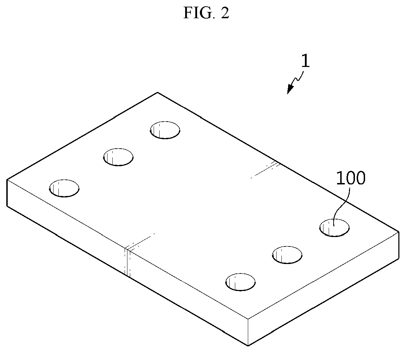

The gas release member 1 may have the hole 100 at two ends. That is, when the sheet that comprises the gas release member 1 is rectangular in shape, the hole 100 may be disposed in two horizontal regions or two vertical regions of the peripheral region (see FIG. 2). With the holes 100, it may be easy to attach the gas release member 1 to the battery case and allow gas inside the battery to discharge. More specifically, as shown in FIG. 1, when the sheet that comprises the gas release member 1 is rectangular in shape, the holes 100 may be disposed in both the two horizontal regions and the two vertical regions of the peripheral region 1b.

The "hole" as used herein refers to a space that is hollow (for example, 1/4 or more of the thickness) in the thickness direction to achieve the objective of the present disclosure no matter whether the hole passes through the gas release member 1 in the thickness direction or not. The shape of the hole 100 is not limited to a particular shape, but the hole 100 may have a circular, oval or elliptical, triangular, wavy or corrugated, or rectangular cross section, and when considering process efficiency, the hole 100 may have a circular, or oval or elliptical cross section.

As shown in FIG. 1, when the sheet that comprises the gas release member 1 is rectangular in shape, two or more holes 100 may be disposed in each of the two horizontal regions and two or more holes 100 may be disposed in each of the two vertical regions, and in this instance, the hole 100 may be circular, or oval or elliptical in cross section, and the diameter of the hole 100 may be 10 *µ*m to 500 *µ*m, but is not limited thereto. When the diameter of the hole 100 satisfies the above-described range, it may be easier to improve the adhesion characteristics between the gas release member 1 and the battery case.

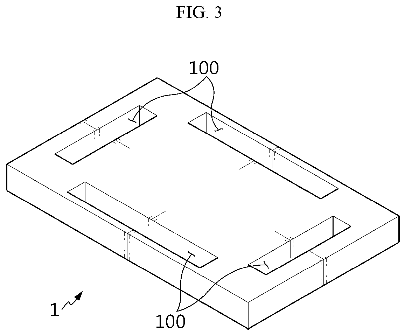

Additionally, as shown in FIG. 3, when the sheet that comprises the gas release member 1 is rectangular in shape, the hole 100 may be rectangular in shape, and one or more holes 100 may be disposed in each of the two horizontal regions, and one or more holes 100 may be disposed in each of the two vertical regions, but is not limited thereto.

The hole 100 may be formed by, for example, a physical or chemical method. For example, the hole 100 may be formed in the gas release member 1 using a drill or a laser. Alternatively, the hole 100 may be formed in the gas release member 1 by wet etching or pattern printing of fluorine-based resin.

In an embodiment of the present disclosure, a ratio of the total area of the holes 100 to the total area of the gas release member 1 may be 5% to 50%. When the total area of the holes 100 satisfies the above-described range, it may be easier to improve the adhesion characteristics between the gas release member 1 and the case.

According to the invention, the sheet that comprises the gas release member 1 comprises the fluorine-based resin. The fluorine-based resin may comprise a repeating unit derived from a monomer of tetrafluoroethylene, vinyl fluoride, vinylidene fluoride, or two or more of them. In particular, when the fluorine-based resin comprises a repeating unit derived from tetrafluoroethylene, it may be more suitable as the material of the gas release member 1.

In an embodiment of the present disclosure, the gas permeability of the gas release member 1 may be 40 to 150 bar at 60°C. For example, the permeability by carbon dioxide may satisfy the above-described range. Additionally, the gas permeability of the gas release member 1 may satisfy the above-described range at 60°C based on the thickness of 200 *µ*m. When the gas permeability of the gas release member 1 satisfies the above-described range, it may be more effective in releasing gas generated in the battery. In the present disclosure, the gas permeability may be measured in accordance with ASTM F2476-20.

In an embodiment of the present disclosure, the amount of moisture infiltration of the gas release member 1 may be 10 mg to 100 mg at 25°C, 50 %RH for 10 years. When the amount of moisture infiltration of the gas release member 1 satisfies the above-described range, it may be more effective in preventing the infiltration of moisture from the gas release member 1. The amount of moisture infiltration of the gas release member 1 may be measured in accordance with ASTMF 1249. In this instance, the amount of moisture infiltration may be measured using MCOON certified equipment.

In an embodiment of the present disclosure, the thickness of the gas release member 1 may be 50 to 500 *µ*m. When the thickness of the gas release member 1 satisfies the above-described range, it is possible to facilitate the release of gas and thermal adhesion to the battery case.

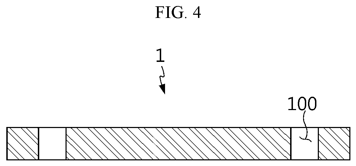

FIG. 4 is a cross-sectional view of FIG. 1, taken along the line A-A'.

Referring to FIG. 4, the holes 100 pass through the gas release member 1 in the thickness direction of the gas release member 1. When the holes 100 are formed through the gas release member 1 in the thickness direction of the gas release member 1, it is possible to further improve the adhesion characteristics between the gas release member 1 and the battery case.

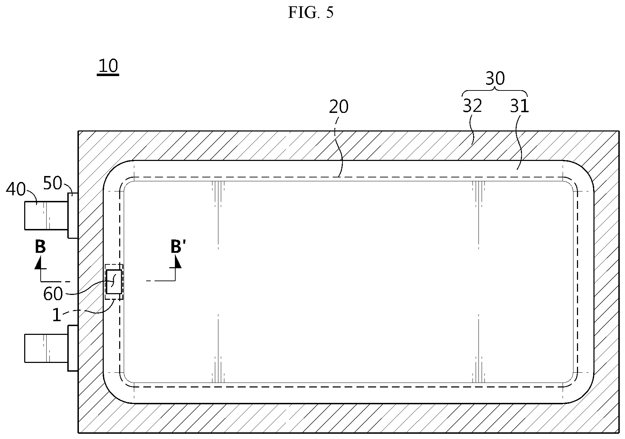

FIG. 5 is a top view of a secondary battery according to an embodiment of the present disclosure.

Referring to FIG. 5, the secondary battery 10 according to an embodiment of the present disclosure comprises an electrode assembly 20 and a case 30 accommodating the electrode assembly 20.

The secondary battery 10 may comprise an electrode lead 40 and a lead film 50 connected to the electrode assembly 20.

The electrode assembly 20 comprises a positive electrode plate, a negative electrode plate and a separator. The electrode assembly 20 may comprise the positive electrode plate and the negative electrode plate stacked in a sequential order with the separator interposed between them.

The positive electrode plate may comprise a positive electrode current collector of a metal foil having high conductivity, for example, an aluminum (Al) foil and a positive electrode active material layer coated on at least one surface of the positive electrode current collector. Additionally, the positive electrode plate may comprise a positive electrode tab made of a metal, for example, aluminum (Al) at an end. The positive electrode tab may protrude from the end of the positive electrode plate. The positive electrode tab may be welded to the end of the positive electrode plate or adhered using a conductive adhesive.

The negative electrode plate may comprise a negative electrode current collector of a conductive metal foil, for example, a copper (Cu) foil, and a negative electrode active material layer coated on at least one surface of the negative electrode current collector. Additionally, the negative electrode plate may comprise a negative electrode tab made of a metal, for example, nickel (Ni) at an end. The negative electrode tab may protrude from the end of the negative electrode plate. The negative electrode tab may be welded to the end of the negative electrode plate or adhered using a conductive adhesive.

The separator is disposed between the positive electrode plate and the negative electrode plate to electrically insulate the positive electrode plate from the negative electrode plate. The separator may be a porous membrane that allows lithium ions to pass through between the positive electrode plate and the negative electrode plate. The separator may comprise, for example, a porous membrane using polyethylene (PE), polypropylene (PP), or a composite film thereof.

The separator may have an inorganic coating layer on the surface. The inorganic coating layer may have a structure in which inorganic particles are bonded by a binder to form a pore structure (interstitial volume) between the particles.

The electrode assembly 20 may include a j elly-roll (wound) type electrode assembly having a structure in which long sheet type positive electrodes and long sheet type negative electrodes are wound with a separator interposed between them, a stack type electrode assembly having a structure in which a plurality of positive electrodes and a plurality of negative electrodes cut into a predetermined size are stacked in a sequential order with a separator interposed between them, and a stack/folding type electrode assembly having a structure in which bi-cells or full cells are wound, each cell including a predetermined unit of positive electrodes and negative electrodes stacked with a separator interposed between them.

The case 30 includes a receiving portion 31 in which the electrode assembly is received inside, and a sealing portion 32 that forms a sealing structure on the outer periphery. The sealing portion 32 may be sealed by thermal adhesion by heat or a laser.

The case 30 includes a gas barrier layer and an inner resin layer comprising a sealant resin.

More specifically, the gas barrier layer may be a metal layer. The case 30 may be a laminate sheet comprising a resin layer and a metal layer. More specifically, the case 30 may be made of the laminate sheet, and may comprise an outer resin layer that forms the outermost side, a gas barrier layer made of metal to prevent a gas from passing through, and an inner resin layer for sealing.

The outer resin layer may comprise a polyester-based film using poly(ethylene terephthalate) (PET), polybutyleneterephthalate, polyethylenenaphthalate, polybutylenenaphthalate, copolymerized polyester, polycarbonate and nylon, and may be formed as a single layer or a multilayer.

The barrier metal layer may comprise aluminum and copper.

The inner resin layer may comprise the sealant resin or may be a layer made of the sealant resin, and may be formed as a single layer or a multilayer.

The sealant resin may comprise polypropylene (PP), acid modified polypropylene (PPa), random polypropylene, an ethylene propylene copolymer or two or more of them. The ethylene propylene copolymer may comprise ethylene-propylene rubber and an ethylene-propylene block copolymer, but is not limited thereto.

The case 30 may be a pouch type.

The pouch-type case 30 may comprise an upper pouch and a lower pouch. When the case 30 comprises the upper pouch and the lower pouch, after the upper pouch and the lower pouch are placed such that the sealant resins face each other, the battery may be sealed by welding of the sealant resins facing each other by heat and pressure.

The welding of the sealing portion 32 may include heat welding and ultrasonic welding, but is not limited to a particular method and includes any method for welding of the sealing portion 32.

In some embodiments, the sealing portion 32 may be sealed by four-side sealing or three-side sealing on the edge of the case 30. In the three-side sealing structure, after the upper pouch and the lower pouch are formed in one pouch sheet, the boundary of the upper pouch and the lower pouch is bent such that the receiving portions 31 of the upper pouch and the lower pouch are placed one over another and the three remaining edges except the bent portion are sealed.

The electrode lead 40 may be electrically connected to an electrode tab (not shown) included in the electrode assembly 20, and may protrude in the outward direction of the case 30 via the sealing portion 32. Additionally, the lead film 50 may be disposed at a region corresponding to the sealing portion 32 either above or below the electrode lead 40 or both. Accordingly, the lead film 50 may prevent a short in the electrode lead 40 during the welding, and improve sealability of the sealing portion 32 and the electrode lead 40.

Referring to FIG. 5, the opening 60 is formed in part of the case 30. The opening 60 passes through the case 30 in the thickness direction. The gas release member 1 according to an embodiment of the present disclosure is adhered to the inner side of the opening 60.

Since the gas release member 1 is disposed on the inner side of the opening 60, gas generated in the battery may be discharged from the battery through the opening 60 via the gas release member 1.

The opening 60 may be formed in at least one of the upper part and the lower part of the case 30. That is, only one opening 60 may be formed, but a plurality of openings 60 may be formed.

Referring to FIG. 5, the opening 60 may be formed in part of the case 30 except the sealing portion 32. The opening 60 may be formed by the commonly used method, for example, punching.

After the case 30 is formed, the opening 60 may be formed in the case 30 before the electrode assembly 20 is inserted. After the opening 60 is formed, the gas release member 1 according to the invention is attached to the inner side of the opening 60 to manufacture the secondary battery 10 including the gas release member 1. The gas release member 1 is adhered enough to cover the entire opening 60.

The gas release member 1 is attached to the inner side of the opening 60 by heat welding.

In this process, part of the case 30 overlapping with the gas release member 1 near the opening 60 may be inserted into the hole of the gas release member 1. For example, the sealant resin of the inner resin layer overlapping with the gas release member 1 near the opening 60 may flow into the hole of the gas release member 1. Accordingly, it is possible to improve the adhesion characteristics of the gas release member 1 and the case 30.

In an embodiment of the present disclosure, the gas release member 1 is made of the gas permeable sheet comprising the fluorine-based resin, and the glass transition temperature of the fluorine-based resin may be higher than the glass transition temperature of the sealant resin that forms the inner resin layer. When the glass transition temperature of the fluorine-based resin is higher than the glass transition temperature of the sealant resin, the sealant resin may permeate into the hole 100 of the gas release member 1 more easily during the heat welding of the case 30 and the gas release member 1.

In an embodiment of the present disclosure, the glass transition temperature of the fluorine-based resin may be 30°C to 170°C. When the glass transition temperature of the fluorine-based resin satisfies the above-described range, the sealant resin may permeate into the hole 100 of the gas release member 1 more easily during the heat welding of the case 30 and the gas release member 1.

In an embodiment of the present disclosure, the glass transition temperature of the sealant resin may be -150°C to 0°C. When the glass transition temperature of the sealant resin satisfies the above-described range, the sealant resin may permeate into the hole 100 of the gas release member 1 more easily during the heat welding of the case 30 and the gas release member 1.

In an embodiment of the present disclosure, the sealant resin may comprise a polyolefin-based resin. For example, the polyolefin-based resin may comprise polypropylene, polyethylene, polyvinyldifluoride (PVDF) or two or more of them.

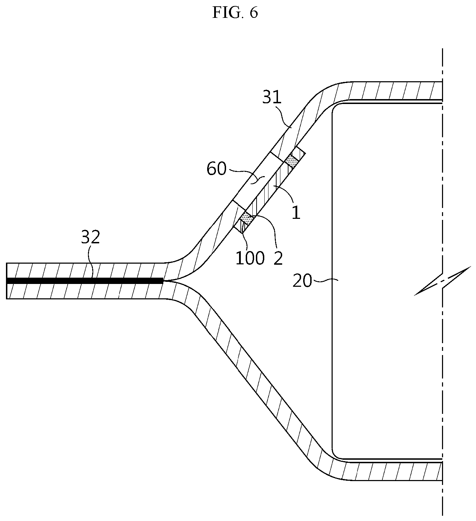

FIG. 6 is a cross-sectional view of FIG. 5, taken along the line B-B'.

Referring to FIG. 6, the sealant resin 2 flows into the hole 100 of the gas release member 1. Accordingly, it may be easy to secure the gas release member 1 to the inner side of the opening 60.

Referring to FIG. 6, the opening 60 passing through the case in the thickness direction is formed in part of the case. The size of the gas release member 1 is larger than the size of the opening 60, so the gas release member 1 covers the entire opening 60. For example, when the gas release member 1 and the opening 60 have a four-sided shape, the horizontal or vertical length of the gas release member 1 may be larger than the horizontal or vertical length of the opening 60. When the gas release member 1 and the opening 60 have a circular shape, the diameter of the gas release member 1 may be larger than the diameter of the opening 60. When the gas release member 1 has a four-sided shape and the opening 60 has a circular shape, the horizontal or vertical length of the gas release member 1 may be greater than the diameter of the opening 60.

Since the size of the gas release member 1 is larger than the size of the opening 60, the gas release member 1 has a sufficient area for adhesion to the inner resin layer disposed in the receiving portion 31 of the case, which makes it easier for the gas release member 1 to attach to the case.

Referring to FIG. 6, the hole 100 of the gas release member 1 is disposed at the area in which the gas release member 1 overlaps with the inner resin layer disposed in the receiving portion 31 of the case. Since the hole 100 of the gas release member 1 is disposed at the area in which the gas release member 1 overlaps with the inner resin layer disposed in the receiving portion 31 of the case, part of the inner resin layer overlapping with the gas release member 1 may flow into the hole 100 of the gas release member 1. That is, the sealant resin 2 of the inner resin layer overlapping with the gas release member 1 near the opening 60 flows into the hole of the gas release member 1 by heat, laser or ultrasonic treatment. Accordingly, it is possible to improve the bonding strength of the gas release member 1 and the case, and enhance the adhesion durability.

With the improved adhesion characteristics of the gas release member 1 and the case, it is possible to reduce the likelihood that a gap is formed between the gas release member 1 and the case after long-term use of the battery cell. Accordingly, it is possible to improve the release of gas generated in the battery cell through the gas release member, and suppress the infiltration of moisture into the battery cell.

When gas generated in the battery cell is smoothly discharged through the gas permeable gas release member and the infiltration of moisture into the battery cell is suppressed, venting does not occur and the battery cell may keep operating well.

### [Description of Reference Numerals]

1: Gas release member
1a: Central region
1b: Peripheral region
2: sealant resin
10: Secondary battery
20: Electrode assembly
30: Case
31: Receiving portion
32: Sealing portion
40: Electrode lead
50: Lead film
60: Opening
100: Hole

## Claims

1. A secondary battery (10), comprising:
an electrode assembly (20); and
a case (30) accommodating the electrode assembly (20),
wherein the case (30) comprises a gas barrier layer and an inner resin layer comprising a sealant resin (2),
wherein an opening (60) passing through the case (30) in a thickness direction is formed in part of the case (30),
wherein the secondary battery (10) comprises a gas release member (1) thermally adhered to an inner side of the opening (60) to cover the entire opening (60),
wherein the gas release member (1) is a sheet having gas permeability, wherein the sheet comprises a fluorine-based resin, wherein a peripheral region (1b) of the sheet has a hole (100),
wherein the hole (100) of the gas release member (1) is disposed at an area in which the gas release member (1) overlaps with the inner resin layer of the case (30),
wherein the sealant resin (2) of the inner resin layer flows into the hole (100) of the gas release member (1),
the secondary battery (10) being **characterised in that**
the hole (100) passes through the gas release member (1) in a thickness direction of the gas release member (1),
wherein a ratio of a total area of the hole (100) to a total area of the gas release (1) member is 5% to 50%. Reply to communication pursuant to Article 94(3) EPC dated 23.09.2025

2. The secondary battery (10) according to claim 1, wherein the peripheral region (1b) is a region equal to or smaller than a length from an end of the sheet to 2/5 of a total length of the sheet.

3. The secondary battery (10) according to claim 1, wherein a width of the peripheral region (1b) is 2 mm or more from the end of the sheet.

4. The secondary battery (10) according to claim 3, wherein a width of the peripheral region (1b) is 15 mm or less from the end of the sheet.

5. The secondary battery (10) according to claim 1, wherein the sheet is rectangular in shape, and the hole (100) is disposed in two horizontal regions or two vertical regions of the peripheral region (1b).

6. The secondary battery (10) according to claim 1, wherein the sheet is rectangular in shape, and the hole (100) is disposed in two horizontal regions and two vertical regions of the peripheral region (1b).

7. The secondary battery (10) according to claim 5 or 6, wherein one or more holes (100) are disposed in each of the two horizontal regions, and one or more holes (100) are disposed in each of the two vertical regions.

8. The secondary battery (10) according to claim 7, wherein the hole (100) has Reply to communication pursuant to Article 94(3) EPC dated 23.09.2025 a circular, or an elliptical cross section.

9. The secondary battery (10) according to claim 8, wherein a diameter of the hole (100) is 10 *µ*m to 500 *µ*m.

10. The secondary battery (10) according to claim 6, wherein the hole (100) is circular in shape, and the peripheral region (1b) is a region equal to or smaller than the length from an end of the sheet to 2/5 of a diameter of the sheet.

11. The secondary battery (10) according to claim 1, wherein an amount of moisture infiltration of the gas release member is 10 mg to 100 mg at 25°C, 50 %RH for ten years.

12. The secondary battery (10) according to claim 1, wherein a thickness of the gas release member is 50 to 500 *µ*m.

13. The secondary battery (10) according to claim 1, wherein the case (30) further comprises an outer resin layer, wherein the gas barrier layer is made of metal, wherein the outer resin layer, the gas barrier layer and the inner resin layer are stacked in a sequential order.

14. The secondary battery (10) according to claim 1, wherein the glass transition temperature of the fluorine-based resin is higher than a glass transition temperature of the Reply to communication pursuant to Article 94(3) EPC dated 23.09.2025 sealant resin (2).

15. The secondary battery (10) according to claim 1, wherein the sealant resin (2) comprises polypropylene, polyethylene, polyvinyldifluoride (PVDF) or two or more of them

## Patentansprüche

1. Sekundärbatterie (10), umfassend:
eine Elektrodenanordnung (20); und
ein Gehäuse (30),
das die Elektrodenanordnung (20) aufnimmt,
wobei das Gehäuse (30) eine Gassperrschicht und eine innere Harzschicht, die ein Dichtungsharz (2) umfasst, umfasst,
wobei eine Öffnung (60), die in einer Dickenrichtung durch das Gehäuse (30) verläuft, in einem Teil des Gehäuses (30) gebildet ist, wobei die Sekundärbatterie (10) ein Gasfreisetzungselement (1) umfasst, das thermisch an einer Innenseite der Öffnung (60) haftet, um die gesamte Öffnung (60) zu bedecken,
wobei das Gasfreisetzungselement (1) eine Folie ist, die Gasdurchlässigkeit aufweist, wobei die Folie ein Harz auf Fluorbasis umfasst,
wobei ein Randbereich (1b) der Folie ein Loch (100) aufweist, wobei das Loch (100) des Gasfreisetzungselements (1) in einem Bereich angeordnet ist, in dem das Gasfreisetzungselement (1) die innere Harzschicht des Gehäuses (30) überlappt, wobei das Dichtungsharz (2) der inneren Harzschicht in das Loch (100) des Gasfreisetzungselements (1) fließt,
wobei die Sekundärbatterie (10) **dadurch gekennzeichnet ist, dass** das Loch (100) in einer Dickenrichtung des Gasfreisetzungselements (1) durch das Gasfreisetzungselement (1) verläuft,
wobei ein Verhältnis einer Gesamtfläche des Lochs (100) zu einer Gesamtfläche des Gasfreisetzungselements (1) 5 % bis 50 % beträgt.

2. Sekundärbatterie (10) nach Anspruch 1, wobei der Randbereich (1b) ein Bereich ist, der gleich oder kleiner als eine Länge von einem Ende der Folie bis zu 2/5 einer Gesamtlänge der Folie ist.

3. Sekundärbatterie (10) nach Anspruch 1, wobei eine Breite des Randbereichs (1b) 2 mm oder mehr vom Ende der Folie beträgt.

4. Sekundärbatterie (10) nach Anspruch 3, wobei eine Breite des Randbereichs (1b) 15 mm oder weniger vom Ende der Folie beträgt.

5. Sekundärbatterie (10) nach Anspruch 1, wobei die Folie rechteckig in der Form ist und das Loch (100) in zwei horizontalen Bereichen oder zwei vertikalen Bereichen des Randbereichs (1b) angeordnet ist.

6. Sekundärbatterie (10) nach Anspruch 1, wobei die Folie rechteckig in der Form ist und das Loch (100) in zwei horizontalen Bereichen und zwei vertikalen Bereichen des Randbereichs (1b) angeordnet ist.

7. Sekundärbatterie (10) nach Anspruch 5 oder 6, wobei ein oder mehrere Löcher (100) in jedem der zwei horizontalen Bereiche angeordnet sind und ein oder mehrere Löcher (100) in jedem der beiden vertikalen Bereiche angeordnet sind.

8. Sekundärbatterie (10) nach Anspruch 7, wobei das Loch (100) einen kreisförmigen oder einen elliptischen Querschnitt aufweist.

9. Sekundärbatterie (10) nach Anspruch 8, wobei ein Durchmesser des Lochs (100) 10 µm bis 500 µm beträgt.

10. Sekundärbatterie (10) nach Anspruch 6, wobei das Loch (100) kreisförmig in der Form ist und der Randbereich (1b) ein Bereich ist, der gleich oder kleiner als die Länge von einem Ende der Folie bis zu 2/5 eines Durchmessers der Folie ist.

11. Sekundärbatterie (10) nach Anspruch 1, wobei eine Menge an Feuchtigkeitseinfiltration des Gasfreisetzungselements 10 mg bis 100 mg bei 25 °C, 50 % rF in zehn Jahren beträgt.

12. Sekundärbatterie (10) nach Anspruch 1, wobei eine Dicke des Gasfreisetzungselements 50 bis 500 µm beträgt.

13. Sekundärbatterie (10) nach Anspruch 1, wobei das Gehäuse (30) weiter eine äußere Harzschicht umfasst, wobei die Gassperrschicht aus Metall gefertigt ist, wobei die äußere Harzschicht, die Gassperrschicht und die innere Harzschicht in einer sequentiellen Reihenfolge gestapelt sind.

14. Sekundärbatterie (10) nach Anspruch 1, wobei die Glasübergangstemperatur des Harzes auf Fluorbasis höher ist als eine Glasübergangstemperatur des Dichtungsharzes (2).

15. Sekundärbatterie (10) nach Anspruch 1, wobei das Dichtungsharz (2) Polypropylen, Polyethylen, Polyvinyldifluorid (PVDF) oder zwei oder mehr davon umfasst.

## Revendications

1. Batterie secondaire (10), comprenant :
un ensemble d'électrodes (20) ; et
un boîtier (30) logeant l'ensemble d'électrodes (20),
dans laquelle le boîtier (30) comprend une couche formant barrière aux gaz et une couche de résine intérieure comprenant une résine d'étanchéité (2),
dans laquelle une ouverture (60) traversant le boîtier (30) dans un sens de l'épaisseur est formée dans une partie du boîtier (30),
dans laquelle la batterie secondaire (10) comprend un élément de libération de gaz (1) collé thermiquement sur un côté intérieur de l'ouverture (60) pour couvrir toute l'ouverture (60),
dans laquelle l'élément de libération de gaz (1) est une feuille présentant une perméabilité aux gaz, dans laquelle la feuille comprend une résine à base de fluor, dans laquelle une région périphérique (1b) de la feuille présente un trou (100),
dans laquelle le trou (100) de l'élément de libération de gaz (1) est disposé dans une zone où l'élément de libération de gaz (1) chevauche la couche de résine intérieure du boîtier (30),
dans laquelle la résine d'étanchéité (2) de la couche de résine intérieure s'écoule dans le trou (100) de l'élément de libération de gaz (1),
la batterie secondaire (10) étant **caractérisée en ce que** le trou (100) traverse l'élément de libération de gaz (1) dans un sens de l'épaisseur de l'élément de libération de gaz (1),
dans laquelle un rapport de la surface totale du trou (100) à la surface totale de l'élément de libération de gaz (1) est de 5 % à 50 %.

2. Batterie secondaire (10) selon la revendication 1, dans laquelle la région périphérique (1b) est une région égale ou inférieure à une longueur allant d'une extrémité de la feuille à 2/5 d'une longueur totale de la feuille.

3. Batterie secondaire (10) selon la revendication 1, dans laquelle une largeur de la région périphérique (1b) est de 2 mm ou plus à partir de l'extrémité de la feuille.

4. Batterie secondaire (10) selon la revendication 3, dans laquelle une largeur de la région périphérique (1b) est de 15 mm ou moins à partir de l'extrémité de la feuille.

5. Batterie secondaire (10) selon la revendication 1, dans laquelle la feuille est de forme rectangulaire, et le trou (100) est disposé dans deux régions horizontales ou deux régions verticales de la région périphérique (1b).

6. Batterie secondaire (10) selon la revendication 1, dans laquelle la feuille est de forme rectangulaire, et le trou (100) est disposé dans deux régions horizontales et deux régions verticales de la région périphérique (1b).

7. Batterie secondaire (10) selon la revendication 5 ou 6, dans laquelle un ou plusieurs trous (100) sont disposés dans chacune des deux régions horizontales, et un ou plusieurs trous (100) sont disposés dans chacune des deux régions verticales.

8. Batterie secondaire (10) selon la revendication 7, dans laquelle le trou (100) a une section transversale circulaire ou elliptique.

9. Batterie secondaire (10) selon la revendication 8, dans laquelle un diamètre du trou (100) est de 10 µm à 500 µm.

10. Batterie secondaire (10) selon la revendication 6, dans laquelle le trou (100) est de forme circulaire, et la région périphérique (1b) est une région égale ou inférieure à la longueur allant d'une extrémité de la feuille à 2/5 d'un diamètre de la feuille.

11. Batterie secondaire (10) selon la revendication 1, dans laquelle une quantité d'infiltration d'humidité de l'élément de libération de gaz est de 10 mg à 100 mg à 25 °C, 50 % HR pendant dix ans.

12. Batterie secondaire (10) selon la revendication 1, dans laquelle une épaisseur de l'élément de libération de gaz est de 50 à 500 µm.

13. Batterie secondaire (10) selon la revendication 1, dans laquelle le boîtier (30) comprend en outre une couche de résine extérieure, dans laquelle la couche formant barrière aux gaz est faite de métal, dans laquelle la couche de résine extérieure, la couche formant barrière aux gaz et la couche de résine intérieure sont empilées dans un ordre séquentiel.

14. Batterie secondaire (10) selon la revendication 1, dans laquelle la température de transition vitreuse de la résine à base de fluor est supérieure à une température de transition vitreuse de la résine d'étanchéité (2).

15. Batterie secondaire (10) selon la revendication 1, dans laquelle la résine d'étanchéité (2) comprend du polypropylène, du polyéthylène, du poly(difluorure de vinylidène) (PVDF) ou au moins deux d'entre eux.
